Europäisches Patentamt

European Patent Office

Office européen des brevets

(11) Publication number: **0 430 353 A2**

# EUROPEAN PATENT APPLICATION

(21) Application number: 90203083.2

(51) Int. Cl.⁵: **H04M 1/18**, H04M 1/02

(22) Date of filing: 22.11.90

(30) Priority: 30.11.89 IT 2254989

(43) Date of publication of application:
05.06.91 Bulletin 91/23

(84) Designated Contracting States:
AT BE CH DE ES FR GB GR IT LI NL SE
Bulletin 00/1

(71) Applicant: SIEMENS TELECOMUNICAZIONI
S.P.A.
SS. 11 Padana Superiore Km. 158
I-20060 Cassina de Pecchi (Milano)(IT)

(72) Inventor: Covini, Mario
Viale Abruzzi, 23
I-20131 Milano(IT)

(74) Representative: Mittler, Enrico et al
c/o Marchi & Mittler s.r.l. Viale Lombardia, 20
I-20131 Milano(IT)

(54) Electronic telephone set protected against radiofrequency disturbances.

(57) "Electronic telephone set protected against radiofrequency disturbances wherein the components are divided in two blocks, one (CS1) sensitive and one (CS2) insensitive to radiofrequency. The connections between the two blocks (CS1, CS2) are minimized. The components sensitive to radiofrequency are completely compacted and shielded including the keypad layout. Between the two blocks (CS1, CS2) are placed filters (FL, FM) of even considerable size usable because of the compacting of the other components.

Figura 1

EP 0 430 353 A2

## "ELECTRONIC TELEPHONE SET PROTECTED AGAINST RADIOFREQUENCY DISTURBANCES"

The present invention relates to the field of telephone equipment and more specifically to an electronic telephone set protected against radiofrequency disturbances.

The ever wider use of radio communications is creating problems of electromagnetic pollution which in some cases have an adverse effect on telephone service.

Medium and ultra-short wave domestic radio transmissions, private or amateur broadcasting stations are often responsible for malfunctions of telephone equipment located near the transmission antennae.

Modern electronic telephone set has a degree of sensitivity to such disturbances which is growing with circuitry complexity because components are sensitive to radio disturbances either individually or as blocks.

It is clearly important to ensure efficiency of telephone service even in these geographical situations now very widespread wherein there is a high concentration of radio communication.

Radiofrequency disturbances can be divided in two categories, conducted and irradiated.

Conducted disturbances penetrate into the telephone equipment from the telephone line on which they are inducted.

They are usually relatively low frequency disturbances, conventionally below 30MHz.

A typical case is that of an overhead telephone line exposed to the irradiation of an antenna of a medium wave radio transmitter with carrier frequency of approximately 1MHz and amplitude modulation.

Irradiated disturbances penetrate into the telephone equipment inducting themselves directly on the tracks of the printed circuit and its components. These are high frequency disturbances typically over 30MHz.

A typical case is that of telephone set located in a building on whose top is located a ultra-short wave private radio transmitter antenna with carrier frequency of approximately 100MHz and frequency modulation.

There are also cases of mixed conducted & irradiated disturbances. The human body of the telephone user plays a peculiar role in the sensitivity to disturbances because it causes undesired unbalances and couplings by its own impedance to ground.

The coupling typically takes place through the hand which holds the handset and grows during dialling due to the effect of coupling between the keypad circuits and the hand which operates the keys. Known types of electronic telephones do not provide any particular measure for protection of the internal circuitry from radio disturbances. Consequently the use of this known equipment becomes problematic in the above mentioned situations due to the onset of disturbances essentially of the two following types separately or jointly:

- persistent disturbance superimposed on the speech with resulting communication difficulties, and
- disturbances during dialling with transmission of digits which are erroneous or in numbers different from those dialled.

The second case occurs typically due to the effect of the radiofrequency currents which flow through the user's hand to ground. These currents go through the keypad circuit causing false readings by the integrated circuit involved.

Accordingly the object of the present invention is to overcome the above shortcomings and indicate an electronic telephone embodied in accordance with the following criteria:

- division of the components in two blocks, one sensitive to radiofrequency and the other insensitive thereto
- minimisation of the connections between the two blocks,
- compacting of the components sensitive to radiofrequency,
- complete shielding of the components sensitive to radiofrequency including the keypad, and
- placing of filters, even of considerable physical size, between the two blocks and usable because of the compacting of the other components.

To achieve these purposes the object of the present invention is an electronic telephone as described in claim 1. The embodiment of a telephone in accordance with the invention provides numerous advantages over known telephones including the following:

- minimisation of the disturbances due to the influence of the user's impedance to ground on the electronic telephone circuits. Indeed, in ordinary telephones the radiofrequency currents which flow through the user's impedance circulate through the speech amplifiers, the operator's hand holding the handset, the input circuits of the integrated circuit which controls dialling, and the hand of the operator preparing to operate on the keypad. In the telephone which is the object of the invention the circuits sensitive to radiofrequency do not "see" the operator because they are enclosed in a metallic shield or, in other terms, the radiofrequency currents which flow through the user's impedance are made to circulate only on the shield by means of bypass capacitor.

- independent reduction of the effects of irradiated and conducted disturbances. Even if a complete distinction between the two types of disturbance is not possible due to the existence of mixed situations, it can be affirmed that complete metallic shielding of the components sensitive to radiofrequency constitutes a very effective barrier against irradiated disturbances. Such protection from irradiated disturbances allows the embodiment of external filters having the purpose only of protecting from conducted disturbances with increased effectiveness due to specialization. Independent operation on the irradiated and conducted disturbances makes it possible to intervene very effectively and in a manner suited to each situation.

- by compacting and shielding the part of the circuit sensitive to radiofrequency, it is possible to use filters for larger conducted waves in equal total available space. This requirement is strongly felt because, as seen above, the conducted waves have the lowest frequency, typically in the range of medium radio waves, and consequently the inductors and capacitors which make up the filters necessary for their neutralization are expensive and occupy much space.

- the possibility of embodying extractable line and handset filters. This is another benefit connected with the two mentioned above and makes possible the embodiment of different models of filter with different sized frequencies and adoption in each disturbance situation of the most suitable filter for that frequency band.

Other objects and advantages of the present invention will be made clear by the following detailed description of an example of embodiment thereof and the annexed drawings given only as explanatory nonlimiting examples wherein:

FIG. 1 shows an exploded view of a telephone comprising the component parts which are the object of the present invention, and

FIG. 2 shows the diagram of the electronic telephone circuits included in said component parts.

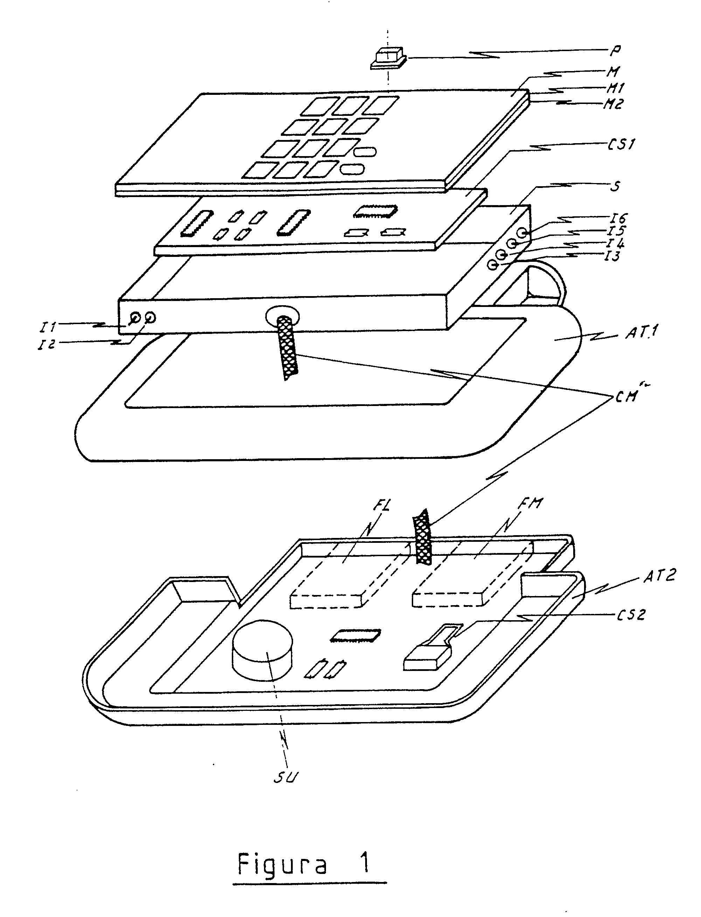

In FIG. 1 references AT1 and AT2 indicate the top and bottom respectively of a telephone body of known type and preferably of plastic material. M indicates a telephone keypad mask preferably of plastic and a lower part M2 of metal adhering to M1. The mask M is housed in the corresponding recess provided in the top AT1 of the telephone body. P indicates a diagram representing an example of one of the keys of the keypad made of plastic optionally with a metallic core constituting an electric shield connected electrically to M2.

S indicates a metallic shield in the form of an open rectangular box consisting of a base and four side walls, the latter connected electrically and hermetically to the metallic surface M2 of the mask of the keypad M which constitutes the cover S as well.

Inside the box S is housed and fixed in a known manner a printed circuit CS1 containing all the electronic telephone components sensitive to radiofrequency and the electrical connections and optionally the electrical switches of the keypad.

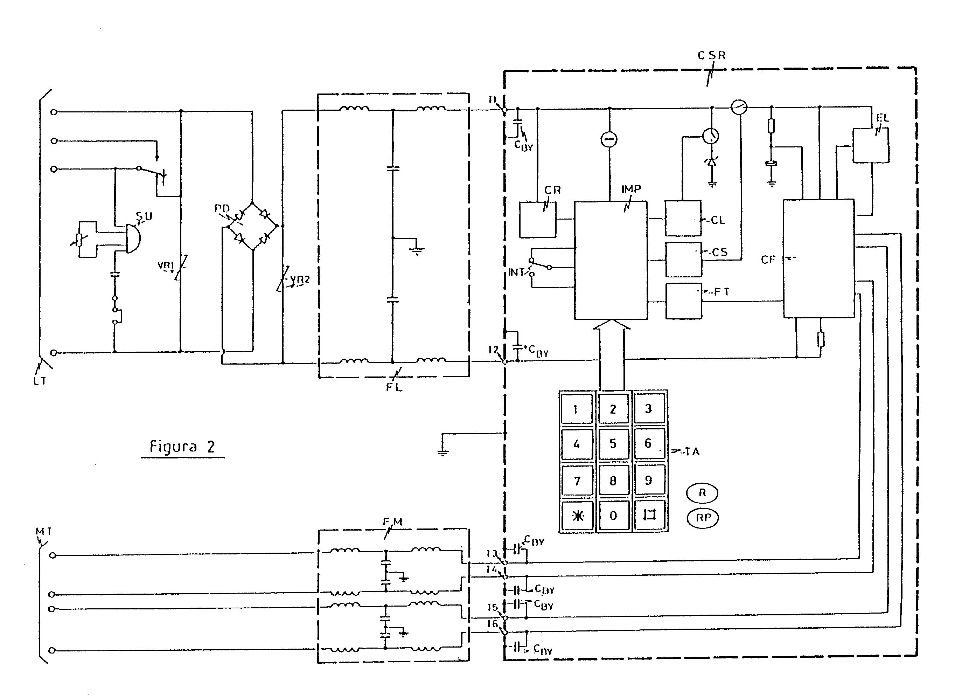

CS2 indicates a printed circuit containing all the components insensitive to radiofrequency, e.g. those indicated by the symbols SU, FL and FM which will be discussed in connection with FIG. 2. CS2 is housed preferably inside the lower part AT2 of the telephone in a position below the shield S. The electrical connections between the printed circuits CS1 and CS2 pass through terminals indicated by 11, 12,.... 16, e.g. consisting of thru-panel capacitors realized on the side walls of the open rectangular box S.

CM indicates a metallic braid for grounding between the shield S and the printed circuit CS2.

Division of the components between the printed circuits CS1 and CS2 of which the manufactured embodiment is represented in FIG. 1 is diagramed in FIG. 2. The latter represents an example of a circuit diagram of an electronic telephone of known type modified in some parts in accordance with some aspects of the present invention.

The circuit diagram can be separated in two parts, the first of which comprises the components sensitive to radiofrequency enclosed in the broken line indicated by CSR and the second comprising the remaining components, which are insensitive to radiofrequency.

The broken line CSR symbolizes the metal shield of FIG. 1 consisting of the shield S and the metallic mask M2.

The components enclosed in the broken line CSR which are in large part mounted on the printed circuit CS1 are of known type and listed below.

CR indicates a reset circuit which detects the on-or off-the-hook status on the line and sends the appropriate signal to the block IMP which consists of a normal integrated circuit generating dialling impulses. CL indicates a normal electronic switch which is controlled by IMP and opens and closes the line to generate the on-line decadic dial pulsing. CF indicates an integrated circuit known in the art as 'speech circuit' which controls the voice signals from and to the handset. CF includes a known circuit EL for cancelling the local effect. CS indicates a silencing circuit which is controlled by IMP and disconnects the speech circuit CF during decadic pulsing to prevent noise in the handset. FT indicates a low-pass filter with a typical cutoff frequency of 3kHz for elimination of spurious components of the dual tone multifrequency (DTMF) signal sent from IMP to CF.

INT indicates a selection switch for the functions of the integrated circuit IMP; the functions are of known type, e.g. for switching between decadic dialling and multifrequency dialling. To reduce the number of connections between the inside and the outside of the metallic shield S and hence the sensitivity to radiofrequency disturbances, INT is enclosed in S, e.g. mounted on the printed circuit CS1 (FIG. 1) with only the control lever projecting, e.g. through a hole in S. Thus it is possible to operate it for example from a hole in a less visible position in the bottom AT2 of the telephone body.

The components of FIG. 2 thus far described are functionally divisible in two blocks identifiable as an impulse circuit (IMP, CR, CL, CS, FT) and a voice circuit (CF, EL).

TA indicates a normal telephone keypad with optional added keys R and RP for activation of the functions known as "record recall" and "repeat last number dialled" respectively and the electrical connections of which are taken to the circuit IMP.

CBY indicates by-pass capacitors for elimination of conducted radiofrequency disturbances on the connections between the outside and inside of the metallic shield.

Said capacitors CBY are connected between a respective through terminal 11, .... 16 and the metallic shield S of FIG. 1 and represented in FIG. 2 by the broken line CSR. The capacitors are for example of the discrete type with a value of 1000pF and are physically located immediately inside of S.

Within the broken lines FL and FM are included passive components which embody low-pass filters for elimination of conducted radiofrequency disturbances from the telephone line LT and the handset MT respectively. FL and FM can for example consist of passive filters LC with a double T structure and a centre tap connected to the ground of the printed circuit CS2 with cutoff frequency of 300kHz. FL includes one of said filters placed between the two conductors of the telephone line LT and the corresponding through terminals 11, 12. FM includes two filters placed between the four connecting wires to the handset MT and the corresponding through terminals 13, ...16.

In practical embodiment the filters FL and FM are enclosed in extractable hermetic metal containers as represented by the broken lines FL and FM of FIG. 1. Their dimensions can thus be changed depending on requirements and in particular they can be increased to contain larger inductors and capacitors thanks to the compactness and smaller space occupied by the other components.

SU, PD, VR1, VR2 indicate known components connected in a known manner and fulfilling functions of telephone ringing (SU), diode rectifier bridge (PD) and varistors (VR1 , VR2) for protection from overvoltages on line.

The components of FIG. 2 not enclosed in the broken-line CSR are mounted on the printed circuit CS2 (FIG. 1).

Embodiment of the printed circuits CS1 and CS2 which support the components of FIG. 2 and of the interconnection between the latter does not constitute a problem for those skilled in the art, once the above description of the example of embodiment of the invention is known.

Numerous variants are possible in the embodiment described as an example in FIGS. 1 and 2 without thereby exceeding the scope of the innovative principles contained in the inventive idea.

For example the capacitors CBY can be of the thru-panel type made through said through terminals 11,... 16.

Or said capacitors can be of the discrete type located physically immediately outside the shield S (FIG. 2).

## Claims

1. Electronic telephone comprising circuits insensitive to radiofrequency disturbances and circuits sensitive to radiofrequency disturbances, such as an impulse, a speech or a keypad circuit, characterized in that it further comprises:
   - a closed metallic shield (S, M2) in which are located said circuits sensitive to radiofrequency disturbances and whose connections to the outside of said shield are taken through through terminals (11,.... 16) made in said shield;
   - low-pass filters (FL, FM) placed outside said metallic shield between said insensitive circuits and said connections to the outside; and
   - capacitors (CBY) connected between said connections to the outside and said metallic shield.

2. Electronic telephone as in claim 1 characterized in that a first printed circuit (CS1) placed inside said closed metallic shield bears said components sensitive to radiofrequency disturbances and in that a second printed circuit (CS2) placed in the immediate proximity of said metallic shield bears said components insensitive to radiofrequency disturbances and said filtering means (FL, FM).

3. Electronic telephone as in claim 2 characterized in that said closed metallic shield consists of an open rectangular box (S) in which are realized said through terminals and by a hermetic metallic cover (M2) which constitutes the lower face of a mask (M) in which are housed pushbuttons (P) of a telephone keypad (TA), a metal braid (CM) being provided for grounding between said rectangular box and said second printed circuit (CS2).

4. Electronic telephone as in claim 3 characterized in that said pushbuttons (P) have a metallic core connected electrically to said metallic cover.

5. Electronic telephone as in claim 1 characterized in that said filter means (FL, FM) consist of passive double-T filters LC with a centre tap to ground and enclosed in extractable hermetic metallic containers and said passive filters LC being one in number for each pair of said connections to the outside.

6. Electronic telephone as in claim 1 characterized in that said capacitors (CBY) consist of by-pass capacitors of the thru-panel type realized by means of said through terminals (11,.... 16).

7. Electronic telephone as in claim 1 characterized in that said capacitors (CBY) are of the discrete type located physically immediately outside said open rectangular box (S).

8. Electronic telephone as in claim 1 characterized in that said capacitors (CBY) are of the discrete type located physically immediately inside said open rectangular box (S).

9. Electronic telephone as in any of the above claims and comprising a selection switch for the functions of the impulse circuit and characterized in that said switch (INT) is located inside said closed metallic shield wherein is made a hole from which emerges only the control lever of said switch.

Figura 1

Figura 2